# EUROPEAN PATENT SPECIFICATION

(11) **EP 0 979 956 B1**
(45) Date of publication and mention of the grant of the patent: **14.01.2004**
(21) Application number: 98115133.5
(22) Date of filing: 12.08.1998
(51) Int. Cl.: F16F 9/32, F16F 9/54, F16B 39/10

(54) **Improvement in an apparatus comprising gas-assisted springs**
Verbesserung an einer Vorrichtung mit gasunterstützten Federn
Amélioration d'un arrangement comprenant ressorts assistés par gaz

(43) Date of publication of application: 16.02.2000
(73) Proprietor: Oleander International B.V., Amsterdam 1071DV (NL)
(72) Inventor: Mercieca, Ray, San Gwann, Malta (MT)
(74) Representative: Giugni, Valter

(56) References cited:
- EP-A- 0 478 219
- GB-A- 2 138 912
- US-A- 4 628 796
- US-A- 5 314 172
- US-A- 5 452 883

## Description

The present invention refers to an apparatus for dampening the movement of the organ in a press or the like, provided with a device for blocking the rotary movement of a cylinder, which may even be threaded, said apparatus being partially inserted in an opening that houses said cylinder and being further located on a support base.

The term "spring" will be used throughout the description given below to indicate a gas-assisted spring of a generic type, but comprising both an external cylinder and an internal piston. Similarly, the term "base" will in the same description be used to mean any kind of support means capable of at least partially carrying or housing said spring, preferably by means of corresponding threads, wherein such a simplification will by no means affect the clearness and intelligibility of the exposition owing to the context in which such terms are used. as anyone skilled in the art will be able to readily realize.

Means generally referred to as "gas-assisted springs" are known in the art which essentially consist of an external cylinder provided with an inner coaxial through-cavity, an inner piston capable slidably mounted inside said cavity, and a sealing element, usually an O-ring, arranged between said cylinder and said piston. Such a ring is adapted to enable said two elements. ie. the cylinder and the piston, to slide with respect to each other, while at the same time ensuring a practically air-tight seal between the elements themselves in the presence of a high pressure difference between a gas in the outside ambient and a gas contained in said cavity.

A portion of said cylinder is threaded externally and between the threaded portion and the non-threaded, usually smooth one there is provided an annular recess adapted to accomodate said O-ring.

Furthermore, between the same portions there is provided a difference of diameter, in the sense that the threaded portion has a smaller diameter, so that an annular step is practically created. Said threaded portion is adapted to be screwed into an appropriate hole provided in a support base up to the point at which said annular step abuts against the annular portion of said base that forms the outer edge of said hole. By screwing said cylinder tightly into said base, the same cylinder becomes clamped owing to mutual compression and friction between said annular step and the corresponding annular portion of the base.

The above short description of a gas-assisted spring has been given to merely informative and general introduction purposes, since those skilled in the art is fully aware of and well informed on the various other expedients and arrangements that are usually employed in such apparatuses, although not cited here since totally irrelevant to the purposes of this description, such as valves, conduits, passages, etc.

The use of these gas-assisted springs in a continuous-duty type of cycle, ie. under a continuous sequence of alternating stresses imposed to the spring, gives rise to such vibrations as to cause the cylinder and, therefore, the spring to become sooner or later loosened.

This is the case given in US 5, 452, 883, wherein a gas spring is shown, having "the cap 32" mated to the "cylinder body 12" with "external threads 36" only. (See Column 3, Rows 64-67).

In order to avoid such a drawback, and therefore to make such a tightening adequately firm and stable, it is a usual practice to apply, on one or both opposing surfaces that abut against each other, special adhesive substances that, when performing their locking action, prevent the cylinder from loosening from the respective base even under particularly serious stresses from heavy-duty conditions of use.

When it then proves necessary to separate the spring from its base for any reason whatsoever, it is a generally known method to heat up the cylinder and the base around the zone in which they abut against each other , up to a temperature that is sufficient to ensure that the heat transmitted to the adhesive melts the latter or at least softens it so as to reduce the locking properties thereof to such an extent as to enable the cylinder to be loosened.

However, in the case of larger-size gas-assisted springs, the cylinders thereof, which are usually made of metal material, constitute bodies that are provided with a remarkable thermal capacity and a very high heat conductivity, this fact causing the heat to rapidly dissipate both in the cylinder of the spring and the base thereof. The result is that it proves impossible for the temperature of the adhesive substance to be practically increased up to a value enabling the cyclinder to be loosened.

In this connection, it is of course possible for the heat input to be correspondingly increased, but. as anyone skilled in the art knows very well, it is not possible for definite limits to be exceeded here owing to both reasons of a technical and operational nature, and the fact that a very localized overheating may cause the component parts of the same spring, in particular the O-ring which is made of elastomeric substances or materials including synthetic or other types of resins which in any case are all very temperature-sensitive , to suffer damages.

It therefore is a main purpose of the present invention to provide a technical solution for general application to cylindrical assemblies that must be screwed against appropriate support bases, in particular gas-assisted screws, which solves the problem of ensuring a tight and stable locking of the cylinder against the respective base in a simple, effective and low-cost manner.

It is a further purpose of the present invention to ensure full and easy reversibility of said locking, so as to be able to completely release all said component parts from each other without any risk of damaging them.

All such aims shall furthermore be reached through the use of techniques and materials that are not only simple, cost-effective and readily available on the market, but also easy to reproduce and to control.

The present invention describes a type of apparatus which is provided with characteristics that reach such aims and are substantially as recited in the appended claims.

Advantages and features of the invention will anyway be more readily understood from the description which is given below by way of non-limiting example with reference to the accompanying drawings, in which:
- Figure 1 is a perspective oblique bottom view of a spring provided with the apparatus according to the present invention;
- Figure 2 is a schematical view of a support base and the arrangement of two springs provided with the apparatus according to the present invention;

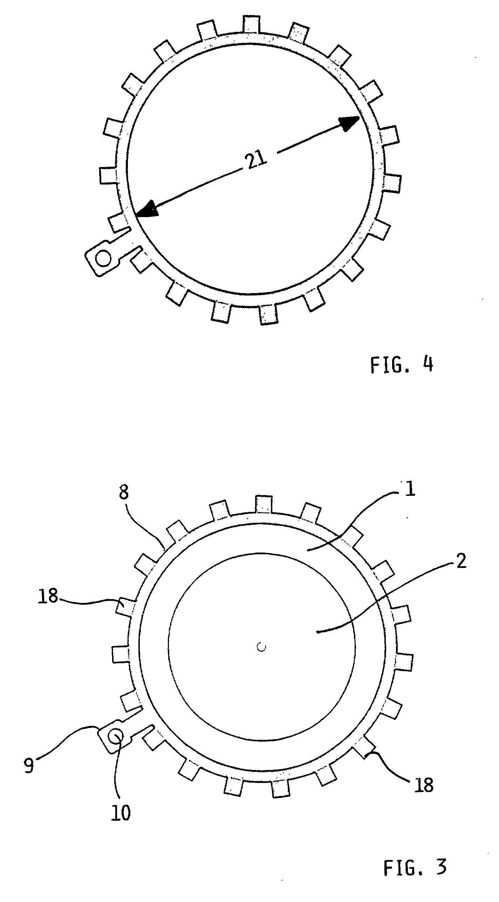

- Figures 3 and 4 are top projection views of a spring provided with the apparatus according to the present invention and the apparatus itself, respectively;

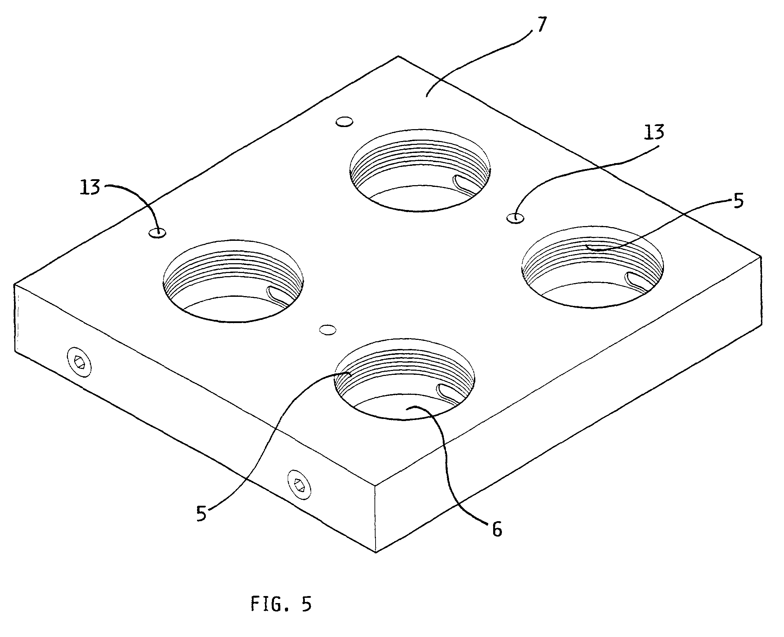

- Figure 5 is a schematical view of a base provided with attachment holes according to the present invention;
- Figure 6 is a symbolic view of a mutual geometric arrangement of a cylinder and an apparatus of a spring according to the present invention;
- Figure 7 is a symbolic view of a different arrangement with respect to the one illustrated in Figure 6;
- Figure 8 is a symbolic , rectified view of the development of the mutually engaging portions of a cylinder and an apparatus of a spring according to the present invention.

With reference to the Figures, a gas-assisted spring according to the present invention can be noticed to be substantially formed by an external cylinder 1, an internal piston 2, and sealing means (not shown). The external cylinder has a hollow construction and houses a cylindrically shaped through-cavity extending coaxially with the axis of said cylinder, said internal piston being housed in said cavity so as to be capable of sliding freely in the interior thereof, whereby it describes a variable-volume chamber 3 with its motion.

An outer portion 4 of the cylinder is provided with a thread that is adapted to engage a corresponding thread 5 provided inside a hole 6 drilled in a support base 7.

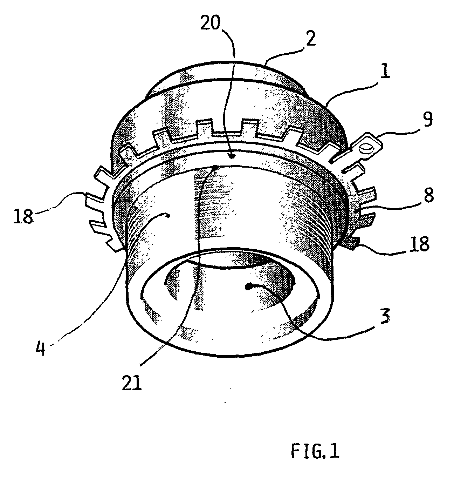

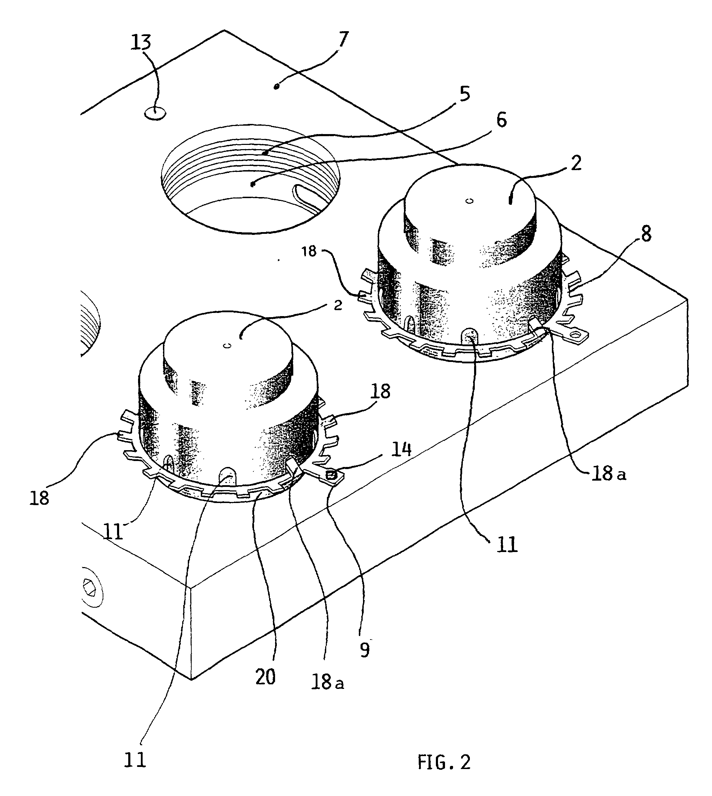

The invention consists in:
a) providing each spring with a ring 8 in the shape of a crown with such a diameter as to be capable of tightly surrounding the cylinder and, at the same time, rotating about the same cylinder, said ring being further provided with:
   - a plurality of appendices 18 extending radially outwards.
   - at least a prominence 9 which is also extending outwards and is provided with catching or locking means, such as in particular a hole 10, wherein said ring is positioned, as this is in particular shown in Figures 1 and 2, between the threaded portion 4 and the non-threaded top portion of the cylinder of the spring;
b) providing in correspondence of the cylinder 1, above said ring 8, a multiplicity of recesses 11 along a circumference on the outer surface of said cylinder 1, wherein each one of said recesses must be capable of accomodating one of said appendices 18 of the ring when said appendices are appropriately folded and clinched upwards: however, it shall be fully clear, as this will anyway be explained in greater detail further on in this description, that it will suffice for just a single appendix to be inserted in a recess, while all other appendices and all other recesses may also remain unused;
c) providing in said support base 7 a catching or locking means 13, eg. preferably a threaded hole, which is capable of engaging, possibly also through further engaging means, such as for instance a screw 14, a corresponding catching and locking means, eg. the afore cited hole 10 provided in said prominence 9.

Said appendices 18 are equidistant from each other and also said recesses are distributed in a regular, unform manner along the outer surface of the cylinder; however, it is actually necessary for the angular separation, or spacing, between said appendices to differ from the angular separation, or spacing, between said recesses, since all actual advantages deriving from the present invention would otherwise be practically lost, as this will be explained in greater detail further on in this description.

The operation of the above described apparatuses and means is as follows:

For a spring to be locked in the corresponding hole, the related ring is first inserted around the cylinder of the spring; the spring is then screwed in a traditional manner into its hole. until it is firmly tightened against the base.

At this point, the ring 8 is rotated until the prominence 9 lies upon the hole 13 provided in the base; the ring is then locked in this position, eg. by means of a screw causing said prominence 9 to engage the catching and locking hole 13.

In such a situation, the various appendices will protrude in positions that are normally different from the positions of the recesses, so that it will not be readily possible for an appendix to be folded so as to cause it to exactly fit into a recess; should such a fact however occur, this will not impair, but on the contrary facilitate the locking of the spring.

The subsequent operation consists in rotating the cylinder by still an angular displacement, which shall be as small as possible, so that after such a final rotation any such appendix is positioned in front of any such recess.

Said final rotation may be carried out either in the direction of a further tightening of the cylinder, wherein care shall of course have been taken in order to previously avoid full tightening of the same cylinder, or in the direction of a slight loosening thereof. since even in this case a tight sealing of the spring would be ensured by the O-ring submitted to a high working pressure from the interior.

The possibility therefore ensues for the cylinder of the spring to be locked in position by folding, as this has been indicated above, said appendix into said exactly opposite recess, as this is best shown in Figure 2 where the folded appendices are generally indicated at 18a.

As regards the mutual geometrical arrangement of said appendices and recesses, it appears appropriate for following considerations to be set forth, wherein the appendices of the ring shall be assumed to amount to a number of - m -, and the recesses in the cylinder of the spring to amount to a number of - h -.

Under such assumptions, for any definite appendix to be able to be fitted into any and all of the recesses, the need quite obviously arises for said cylinder 1 is able to move into all of the h positions which the insertion of said definite appendix in all said h recesss corresponds to

Also all other positions shall of course be counted which the cylinder 1 is able to be moved into in order to enable all other appendices to be inserted into all h recesses. Therefore, the total amount of positions that can be taken by said cylinder 1 is obtained by multiplying the number of recesses by the number of appendices. In the case considered here, such a number of positions of the cylinder 1 in which any such appendix is able to be positioned exactly in front of any such recess therefore amounts to m.h.

Considering the equidistant manner in which said appendices and said recesses are spaced from each other, such positions will be separated by a same angle and, since the total number of positions, as stated above, is m·h, it ensues that the angle of rotation of the cylinder 1, for the latter to move from any position of an appendix inserted in a recess to the nearest position in which another appendix is inserted in a different recess, is 360°/m·h.

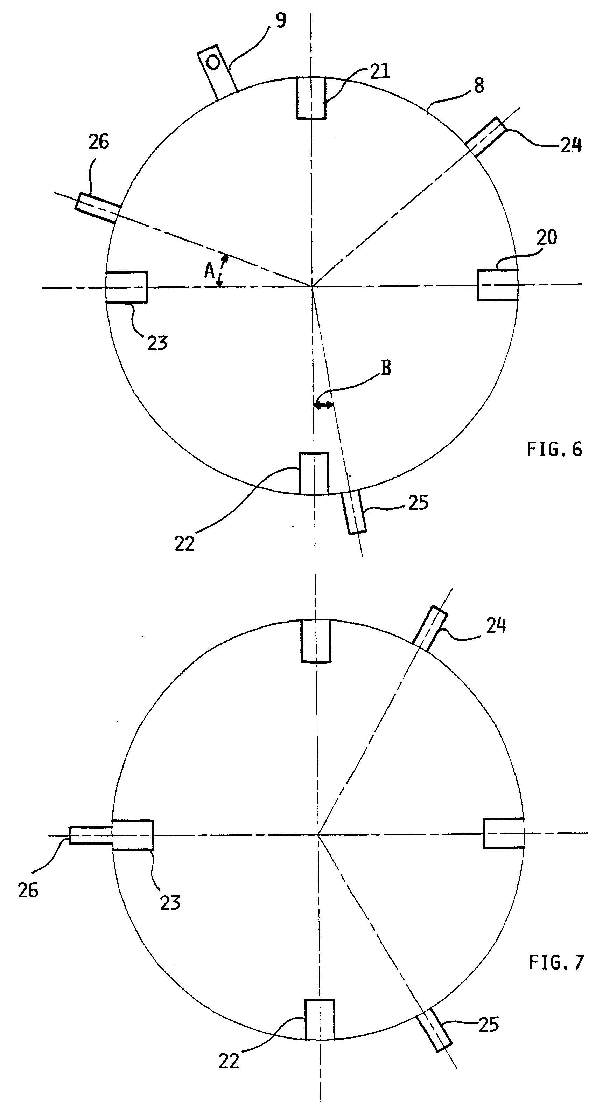

With reference to Figure 6 the case can be noticed in which there are four recesses, which are indicated at 20, 21, 22 and 23, and three appendices that are indicated at 24, 25 and 26.

In this case, the number of positions that can be taken by the cylinder 1 amounts to 4.3 = 12 and, since such twelve positions are equidistant, the angle between each one of said positions is 360°/4.3, ie. 30°.

As a consequence, from any initial position thereof, said cylinder 1 must be rotated, if the rotation occurs in a single direction, by a greatest allowable angle of 30° for an appendix 26 to be inserted into a recess 23, as this is best shown in Figure 7, provided of course that the initial position is the one to which the greatest distance between the closest pair cf appendices/recesses corresponds.

It will be clearly appreciated that, if the ring 8 can be rotated in both directions, then the greatest allowable angle of rotation is halved since all rotations are eliminated which are required to cause a recess to coincide with the closest appendix by moving the cylinder 1 in a single pre-definite direction of rotation, as anyone skilled in the art is readily able tounderstand , and as this is shown in Figure 6 itself, in which the angle "B", by which the cylinder must be rotated in the anti-clockwise direction in order to bring the recess 22 in a position overlapping the nearest appendix 25, is smaller than the angle "A" by which a rotation shall occur in the clockwise direction to bring the recess 23 in a position overlapping the nearest appendix 26.

It conclusively ensues that, if the greatest angle of rotation that is anyway accepted in any direction of rotation is assumed to be equal to β, such a condition is accepted with such a number of recesses m and appendices h that 2β > 360°/m· h.

As a result, the greatest allowable angle of rotation is can be perfectly pre-determined through a corresponding distribution of both recesses and appendices.

Much in the same way, by acting within certain limits that may be inferred from the above considerations, also the width of the appendices and, as a consequence. the recesses can be pre-determined, wherein it should anyway be duly kept in mind that, of course, the respective central angle cannot reach a value of 360°/m or 360°/h, respectively.

Furthermore, from the above considerations it clearly ensues that that it must be kept in mind that neither m nor h may be mutually multiples or submultiples . since in such a case there would be more than one distinct position in which a recess can be brought to coincide with an appendix, thereby making such a configuration partially useless and making most of the above considerations of no avail.

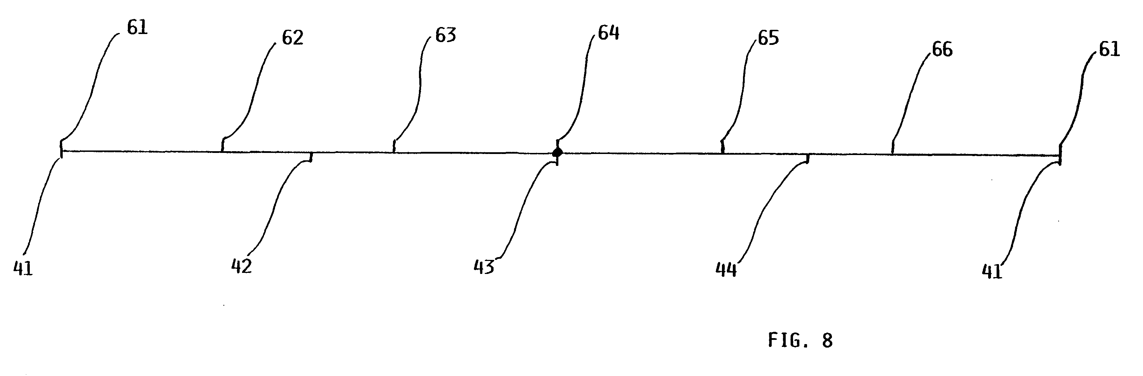

Furthermore, the above cited appendices and recesses cannot have common divisors, either, under penalty of incurring the same kind of drawbacks as the afore mentioned ones. In fact, if reference is made to Figure 8, which illustrates the rectified development of six recesses 61, 62, 63, 64, 65, 66, as well as four appendices 41, 42, 43. 44, in the position in which the recess 61 coincides with the appendix 41, it can be noticed that even the recess 64 overlaps the appendix 43. In this case, both numbers six and four have in fact the same common divisor two.

Conclusively it can be said that a condition for the present invention to be employed in an advantageous manner is given when:
- the numbers of recesses and appendices are not mutually multiples or submultiples , or
- the numbers of recesses and appendices do not share any common divisor.

In other words, such a condition occurs when said numbers are, as generally known, so-called prime numbers.

in an advantageous manner, furthermore, said crown-shaped ring can be sized so as it is able to slip onto said threaded portion 4 of the cylinder, but not onto the remaining portion thereof, so that it can stop by abutting against the afore described step 20. In this way it is obtained that the cylinder is no longer clamped directly against the base, but against said ring, the latter being capable of ensuring a greater elasticity and, therefore, a greater flexibility in the selection of the final locking point. Furthermore, the presence itself of the ring can make it easier for the cylinder to be released when the spring is being loosened.

## Claims

1. Apparatus for dampening the movement of an organ in a press or the like working in an ambient that may possibly be contaminated with materials or substances that may damage or affect the operation of said organ, said apparatus comprising :
- at least one gas-assisted spring with an external cylindrical organ (1) and a cylindrical piston (2) adapted to be housed and slidably displaceable inside said cylindrical organ, said organ and said piston being preferably arranged coaxially, said piston being further adapted to partially move outside said cylindrical organ,
- a variable-volume chamber (3) formed inside said cylindrical organ and delimited by said piston on one side, while the other side thereof is open,
- a substantially cylindrical portion (4) of said cylindrical organ arranged on the opposite side with respect to the base and provided with appropriate threads.
- an elastic annular sealing means arranged externally between said threaded portion (4) and the remaining portion of said cylindrical organ,
- a support base (7) provided with a plurality of threaded holes (6), at least one of which is adapted to accomodate one said substantially cylindrical portion (4) of said cylindrical organ (1).
**characterized in that**:
- said cylindrical organ is provided with an external ring (8) arranged between said substantially cylindrical and threaded portion (4) and the remaining portion of said cylindrical organ;
- said external ring is provided with a plurality of appendices (18) that are extending radially outwards;
- said external ring is also provided with a prominence (9) extending outwards and provided with first engagement means (10);
- the outer cylindrical surface of said gas spring (1) is provided with a multiplicity of recesses (11) along a circumference of said surface adjacent to said external ring, at least a recess being capable of accomodating at least one of said appendices;
- said support base (7) is provided with at least a second catching means (13) adapted to engage, possibly with the use of other third engagement means (14), to said first engagement means (10) provided on said prominence (9).

2. Apparatus according to claim 1, **characterized in that** said appendices (18) are spaced equidistantly from each other along the outer perimeter. of said external ring, and that said recesses (11) are spaced equidistantly from each other along said circumference.

3. Apparatus according to claim 1 or 2, **characterized in that** said first engagement means (10) comprise a through-hole for accomodating said prominence, said second catching means (13) comprise a threaded hole provided in said support base, and said third engagement means (14) comprise a screw adapted to come into said through-hole and engage said threaded hole.

4. Apparatus according to any of the preceding claims, **characterized in that** the number of recesses and appendices can be pre-determined as a function of the greatest allowable angle (β) of (final) rotation required to cause an appendix to overlap a recess by rotating said cylindrical organ in a pre-determined direction.

5. Appar atus according to claim 4, **characterized in that**, once said greatest allowable angle (β) has been pre-defined, said final rotation does not exceed said angle when the number of recesses and the number of appendices comply with the condition that 2β >= 360°/m·h, where m is the number of recesses and h the number of appendices.

6. Apparatus according to any of the preceding claims, **characterized in that** said substantially cylindrical portion (4) of said cylindrical organ has an outer diameter that is smaller than the diameter of the remaining portion; that between said two portions there is provided a step-like configuration (20); and that said ring (8) is capable of being applied against said step-like configuration and has such an inner diameter (21) as to prevent it from being capable of sliding on the remaining, non-threaded top portion of said cylindrical organ.

## Patentansprüche

1. Vorrichtung zur Dämpfung der Bewegung eines Gliedes in einer Presse o. ä., welche in einer Umgebung zu arbeiten hat, die möglicherweise durch solche Substanzen und Stoffe verschmutzt werden kann, die den Betrieb des genannten Gliedes stören oder negativ beeinflussen können, wobei die genannte Vorrichtung
- zumindest einen Gasfeder mit einem zylindrischen Außenteil (1) und einem zylindrischen, im genannten zylindrischen Außenteil unterbringbaren und gleitbar verstellbaren Kolben (2), wobei der genannte Außenteil und der genannte Kolben bevorzugt koaxial angeordnet sind, und wobei der genannte Kolben ferner teilweise aus dem genannten zylindrischen Außenteil herausverschiebbar ist,
- eine innerhalb des genannten zylindrischen Außenteils geformte, auf der einen Seite vom genannten Kolben begrenzte und auf der anderen Seite offene volumenveränderbare Kammer (3),
- ein im wesentlichen zylindrisches, auf der der Basis gegenüberliegenden Seite angeordnetes und mit entsprechenden Gewindegängen versehenes Teilstück (4) des genannten zylindrischen Außenteils,
- ein elastisches, außenseitig zwischen dem genannten Gewindestück (4) und dem übrigen Teil des genannten zylindrischen Außenteils angeordnetes ringförmiges Dichtungsmittel,
- eine mit einer Vielzahl von Gewindebohrungen (6) versehene Unterlage (7), wobei zumindest eine der genannten Gewindebohrungen ein genanntes, im wesentlichen zylindrisches Teilstück (4) des genannten zylindrischen Außenteils aufnehmen kann, aufweist, **dadurch gekennzeichnet, dass**:
- der genannte zylindrische Außenteil mit einem zwischen dem genannten im wesentlichen zylindrischen Gewindeteilstück (4) und dem übrigen Teil des genannten zylindrischen Außenteils angebrachten Außenring (8) versehen ist,
- der genannte Außenring mit einer Vielzahl von sich radial nach außen erstreckenden Ansätzen (18) versehen ist,
- der genannte Außenring zusätzlich mit einer sich nach außen erstreckenden, mit ersten Rastmitteln (10) versehenen Ausragung (9) versehen ist,
- der zylindrische Außenmantel der genannten Gasfeder (1) um eine dem genannten Außenring anliegenden Kreislinie des genannten Außenmantels herum mit einer Vielzahl von Ausnehmungen (11) versehen ist, wobei zumindest eine von solchen Ausnehmungen zumindest einen von den genannten Ansätzen aufnehmen kann,
- die genannte Unterlage (7) mit zumindest einem zweiten Einrastmittel (13) versehen ist, das in die genannte, in der genannten Ausragung (9) versehene erste Rastmittel (10) eventuell mit Hilfe von dritten Rastmitteln (14) einrastbar ist.

2. Vorrichtung nach Anspruch 1, **dadurch gekennzeichnet, dass** die genannten Ansätze (18) gleich voneinander abstehend am Außenumfang des genannten Außenrings entlang angeordnet sind, und dass die genannten Ausnehmungen (11) gleich voneinander abstehend an der genannten Kreislinie entlang angeordnet sind.

3. Vorrichtung nach Anspruch 1 oder 2, **dadurch gekennzeichnet, dass** die genannten ersten Rastmittel (10) eine zum Aufnehmen der genannten Ausragung vorgesehene Durchbohrung aufweisen, dass die genannten zweiten Einrastmittel (13) eine in der genannten Unterlage angebrachte Gewindebohrung aufweisen, und dass die genannten dritten Rastmittel (14) eine durch die genannte Durchbohrung einschiebbare und in die genannte Gewindebohrung einrastbare Schraube umfassen.

4. Vorrichtung nach einem der vorhergehenden Ansprüche, **dadurch gekennzeichnet, dass** die Anzahl der Ausnehmungen and der Ansätze je nach dem größtzulässigen (End)Drehwinkel (β), der zum Bringen eines Ansatzes in eine über einer entsprechenden Ausnehmung liegende Lage durch Drehen des genannten zylindrischen Außenteils in einer vorbestimmten Richtung benötigt wird, vorbestimmt werden kann.

5. Vorrichtung nach Anspruch 4, **dadurch gekennzeichnet, dass** die genannte Enddrehung nach solcher Vorbestimmung des genannten größtzulässigen Drehwinkels (β) diesen Winkel nicht überschreitet, wenn die Anzahl der Ausnehmungen und die Anzahl der Ansätze der Bedingung entsprechen, nach der 2β ≥ 360°/m·h ist, wo m die Anzahl der Ausnehmungen und h die Anzahl der Ansätze ist.

6. Vorrichtung nach einem der vorhergehenden Ansprüche, **dadurch gekennzeichnet, dass** das genannte im wesentlichen zylindrische Teilstück (4) des genannten zylindrischen Außenteils einen kleineren Durchmesser als der übrige Teil desselben aufweist, dass eine stufenförmige Gestaltung (20) zwischen den beiden Abschnitten des genannten zylindrischen Außenteils vorgesehen ist, und dass der genannte Ring (8) gegen diese stufenförmige Gestaltung anbringbar ist und einen solchen Innendurchmesser (21) aufweist, dass er am Schlüpfen auf dem übrigen, kein Gewinde aufweisenden Oberabschnitt des genannten zylindrischen Außenteils sicher verhindert wird.

## Revendications

1. Dispositif pour amortir le mouvement d'un organe dans une presse ou machine similaire fonctionnant dans un milieu pouvant éventuellement être pollué par des substances ou des agents qui sont susceptibles de causer du dommage ou de porter préjudice au fonctionnement dudit organe, ledit dispositif comprenant
- au moins un ressort à gaz avec une partie extérieure cylindrique (1) et un piston cylindrique (2) apte à être logé et se déplacer en glissant dans ladite partie cylindrique extérieure, ladite partie cylindrique extérieure et ledit piston étant de préférence disposés de façon coaxiale, ledit piston étant en outre apte à sortir partiellement de ladite partie cylindrique extérieure,
- une chambre à volume variable (3) formée dans ladite partie cylindrique extérieure et délimitée d'un côté par ledit piston, tandis qu'elle est ouverte de son autre côté,
- une portion essentiellement cylindrique (4) de ladite partie cylindrique extérieure située du côté opposé par rapport à la base et pourvue d'un filetage approprié,
- un moyen élastique annulaire d'étanchéité disposé extérieurement entre ladite portion filetée (4) et la portion restante de ladite partie cylindrique extérieure,
- une base de support (7) pourvue d'une pluralité de trous filetés (6), dont au moins un est apte à accueillir une dite portion essentiellement cylindrique (4) de ladite partie cylindrique extérieure (1),
**caractérisé en ce que**:
- ladite partie cylindrique extérieure est pourvue d'une bague extérieure (8) disposée entre ladite portion essentiellement cylindrique et filetée (4) et la portion restante de ladite partie cylindrique extérieure,
- ladite bague extérieure est pourvue d'une pluralité d'appendices (18) qui s'étendent de façon rayonnée vers l'extérieur,
- ladite bague extérieure est aussi pourvue d'une saillie (9) qui s'étend vers l'extérieur et est pourvue de premiers moyens d'engagement (10),
- la surface cylindrique extérieure dudit ressort à gaz (1) est pourvue d'une multiplicité de cavités (11) tout au long d'une circonférence de ladite surface proche de la dite bague extérieure, au moins une desdites cavités étant apte à accueillir au moins un desdits appendices,
- ladite base de support (7) est pourvue d'au moins un deuxième moyen d'arrêt (13) apte à engager, éventuellement avec l'aide d'autres troisièmes moyens d'engagement (14), lesdits premiers moyens d'engagement (10) pourvus dans ladite saillie (9).

2. Dispositif selon la revendication 1, **caractérisé en ce que** lesdits appendices (18) sont espacés d'une façon équidistante d'entre eux tout au long du périmètre extérieur de ladite bague extérieure, et **en ce que** lesdites cavités (11) sont espacées d'une façon équidistante d'entre elles tout au long de la dire circonférence.

3. Dispositif selon la revendication 1 ou 2, **caractérisé en ce que** lesdits premiers moyens d'engagement (10) comprennent un trou passant pour accueillir ladite saillie, lesdits deuxièmes moyens d'arrêt (13) comprennent un trou fileté pourvu dans ladite base de support, et lesdits troisièmes moyens d'engagement (14) comprennent une vis apte à s'introduire dans ledit trou passant et engager ledit trou fileté.

4. Dispositif selon l'une quelconque des revendications précédentes, **caractérisé en ce que** le nombre de cavités et le nombre d'appendices peuvent être prédéterminés en fonction de l'angle (β) de rotation (final) le plus grand admissible qui est nécessaire en vue de porter une saillie au-dessus d'une cavité en tournant ladite partie cylindrique extérieure dans un sens prédéterminé.

5. Dispositif selon la revendication 4, **caractérisé en ce que,** ledit angle (β) le plus grand admissible ayant été ainsi prédéterminé, ladite rotation finale ne dépasse pas ledit angle lorsque le nombre de cavité et le nombre d'appendices correspondent à la condition où 2β ≥ 360°/m·h, où m est le nombre de cavité et h est le nombre d'appendices.

6. Dispositif selon l'une quelconque des revendications précédentes, **caractérisé en ce que** ladite portion essentiellement cylindrique (4) de ladite partie cylindrique extérieure a un diamètre extérieur qui est plus petit que le diamètre de la portion restante de la même partie cylindrique extérieure, **en ce qu'**une configuration en gradin (20) est pourvue entre lesdites deux portions de ladite partie cylindrique extérieure, et **en ce que** ladite bague (8) est apte à être appliquée contre ladite configuration en gradin et a un diamètre intérieur tel à lui empêcher de se déplacer en glissant sur la portion supérieure restante non-filetée de ladite partie cylindrique extérieure.
